# EUROPEAN PATENT APPLICATION

(11) **EP 4 372 858 A2**
(43) Date of publication of application: **22.05.2024**
(21) Application number: 23208594.4
(22) Date of filing: 08.11.2023
(51) Int. Cl.: H01M 10/04, H01M 10/0525, H01M 50/103, H01M 50/15, H01M 50/16, H01M 50/184, H01M 50/627

(54) **METHOD FOR PRODUCING POWER STORAGE DEVICE AND POWER STORAGE DEVICE**

(30) Priority: 15.11.2022 JP 2022182663
(71) Applicant: TOYOTA JIDOSHA KABUSHIKI KAISHA, Toyota-shi, Aichi-ken, 471-8571 (JP)
(72) Inventor: OBAYASHI, Yoshiro, Toyota-shi, 471-8571 (JP)
(74) Representative: D Young & Co LLP

(57) **Abstract**

A main object of the present disclosure is to provide a method for producing a power storage device wherein a molding failure hardly occurs when molding a resin member. The present disclosure achieves the object by providing a method for producing a power storage device, the method comprising: a preparing step of preparing a predetermined stacked member; a first placing step of placing a predetermined first mold; a first molding step of obtaining a predetermined nest B; a second placing step of placing a predetermined second mold; and a second molding step of molding a predetermined resin member.

## Description

### Technical Field

The present disclosure relates to a method for producing a power storage device and a power storage device.

### Background Art

In a method for producing a power storage device such as a secondary battery, the technology wherein a sealing member is formed along the outer periphery of the electrode stacked body, and further, a resin member is formed along the outer periphery of the sealing member, has been known. Also, a technology wherein a through hole passing through a sealing member and a resin member is formed using a nest (insert), has been known.

For example, Patent Literature 1 discloses a power storage device comprising a stacked body including a bipolar electrode; a first sealing portion placed along the outer periphery of the stacked body; a second sealing portion placed along the outer periphery of the first sealing portion; and a through hole passing through the first sealing portion and second sealing portion. Also, Patent Literature 1 discloses the formation of the second sealing portion by preparing a stacked member (a member including the stacked body and first sealing portion) incorporated with a nest, and then, injection molding.

### Citation List

### Patent Literature

Patent Literature 1: Japanese Patent Application Laid-Open (JP-A) No. 2019-16459

### Summary of Disclosure

### Technical Problem

When a resin member is molded on the stacked member incorporated with a nest by a resin molding method, the nest is inserted into a concave portion of the mold, and held and fixed therein. When the nest is inserted into the concave portion of the mold, if the nest and the concave portion of the mold interfere with each other, the nest may be broken. Therefore, it is necessary to set the dimensions of the concave portion of the mold larger to an extent than the dimensions of the nest. Meanwhile, when the dimensions of the concave portion of the mold are too large with respect to the dimensions of the nest, the resin may leak through the gap during molding, and may cause a burr.

Also, the influence of the nest displacement is noticeably large in the width direction (y-axis direction). Therefore, in the width direction, it is necessary to set the dimensions of the concave portion of the mold relatively larger than the dimensions of the nest. As a result, a molding failure such as burr is more likely to occur notably.

The present disclosure has been made in view of the above circumstances, and a main object of the present disclosure is to provide a method for producing a power storage device wherein a molding failure hardly occurs when molding a resin member.

### Solution to Problem

[1] A method for producing a power storage device, the method comprising:
   a preparing step of preparing a stacked member including an electrode stacked body including a plurality of electrodes stacked in a z-axis direction, a sealing member placed along an outer periphery of the electrode stacked body viewed from the z-axis direction, and a nest A wherein, in an x-axis direction perpendicular to the z-axis direction, one end portion is placed inside the electrode stacked body and the other end portion sticks out from the sealing member;
   a first placing step of inserting the nest A sticking out from the sealing member in the stacked member, into a first concave portion in a first mold;
   after the first placing step, a first molding step of molding a resin portion by feeding a first resin between the nest A and the first concave portion, and obtaining a nest B including the nest A and the resin portion;
   after the first molding step, a second placing step of inserting the nest B sticking out from the sealing member in the stacked member, into a second concave portion in a second mold; and
   after the second placing step, a second molding step of molding a resin member by feeding a second resin between the stacked member and the second mold; and
   a length of the first concave portion in a y-axis direction perpendicular to the z-axis direction and the x-axis direction is identical to that of the second concave portion.
[2] The method for producing a power storage device according to [1], wherein, viewed from the z-axis direction, the nest B includes the resin portion on both sides of the nest A in the y-axis direction.
[3] The method for producing a power storage device according to [1] or [2], wherein, viewed from the y-axis direction, the nest B includes the resin portion on both sides of the nest A in the z-axis direction.
[4] The method for producing a power storage device according to any one of [1] to [3], wherein a melting point of the first resin is higher than the melting point of the second resin.
[5] The method for producing a power storage device according to any one of [1] to [4], wherein the sealing member is a resin member including a third resin;
   the third resin and the second resin are olefin based resin; and
   the first resin is polyester based resin.
[6] The method for producing a power storage device according to any one of [1] to [5], wherein, after the second molding step, the method for producing comprises a through hole forming step of forming a first through hole passing through the sealing member and a second through hole passing through the resin member, by pulling the nest B out from the stacked member and the resin member.
[7] A power storage device comprising: an electrode stacked body including a plurality of electrodes stacked in a z-axis direction; a sealing member placed along an outer periphery of the electrode stacked body viewed from the z-axis direction; and a resin member placed along an outer periphery of the sealing member viewed from the z-axis direction; and
   in an x-axis direction perpendicular to the z-axis direction, the power storage device comprises a first through hole passing through the sealing member, and a second through hole communicated with the first through hole and passing through the resin member; and
   when a direction perpendicular to the x-axis direction and the z-axis direction is regarded as a y-axis direction, a length of the second through hole in the y-axis direction is longer than a length of the first though hole in the y-axis direction.
[8] The power storage device according to [7], wherein a length of the second through hole in the z-axis direction is longer than a length of the first though hole in the z-axis direction.
[9] The power storage device according to [7] or [8], wherein a residual component of a first resin, having a melting point higher than a second resin included in the resin member, exists in an inner wall portion in the second through hole.

### Advantageous Effects of Disclosure

The method for producing a power storage device in the present disclosure exhibits effects that a molding failure hardly occurs when molding a resin member.

### Brief Description of Drawings

FIGS. 1A to 1H are schematic perspective views illustrating an example of a method for producing a power storage device in the present disclosure.
FIGS. 2A to 2D are schematic views illustrating an example of the first placing step and the first molding step in the present disclosure.
FIGS. 3A to 3C are schematic views illustrating an example of the second placing step and the second molding step in the present disclosure.
FIGS. 4A to 4C are schematic views illustrating an example of a conventional resin molding method.
FIG. 5 is a schematic cross-sectional view illustrating an example of an electrode in the present disclosure.
FIG. 6 is a schematic cross-sectional view illustrating an example of a stacked member in the present disclosure.
FIG. 7 is a schematic cross-sectional view illustrating an example of a method for forming a stacked member in the present disclosure.
FIGS. 8A to 8D are schematic views illustrating an example of a nest B in the present disclosure.
FIGS. 9A to 9C are schematic views illustrating an example of a nest B in the present disclosure.
FIGS. 10A to 10B are schematic views illustrating an example of a nest B and a through hole in the present disclosure.
FIGS. 11A to 11B are schematic views illustrating an example of a nest B and a through hole in the present disclosure.
FIG. 12 is a schematic cross-sectional view illustrating an example of a power storage device in the present disclosure.

### Description of Embodiments

The embodiments in the present disclosure will be hereinafter explained in details with reference to drawings. Each drawing described as below is a schematic view, and the size and the shape of each portion are appropriately exaggerated in order to be understood easily. Furthermore, in the present description, upon expressing an embodiment of arranging one member with respect to the other member, when it is expressed simply "on" or "below", both of when the other member is directly arranged on or below the one member so as to contact with each other, and when the other member is arranged above or below the one member interposing an additional member, can be included unless otherwise described.

### A. Method for producing power storage device

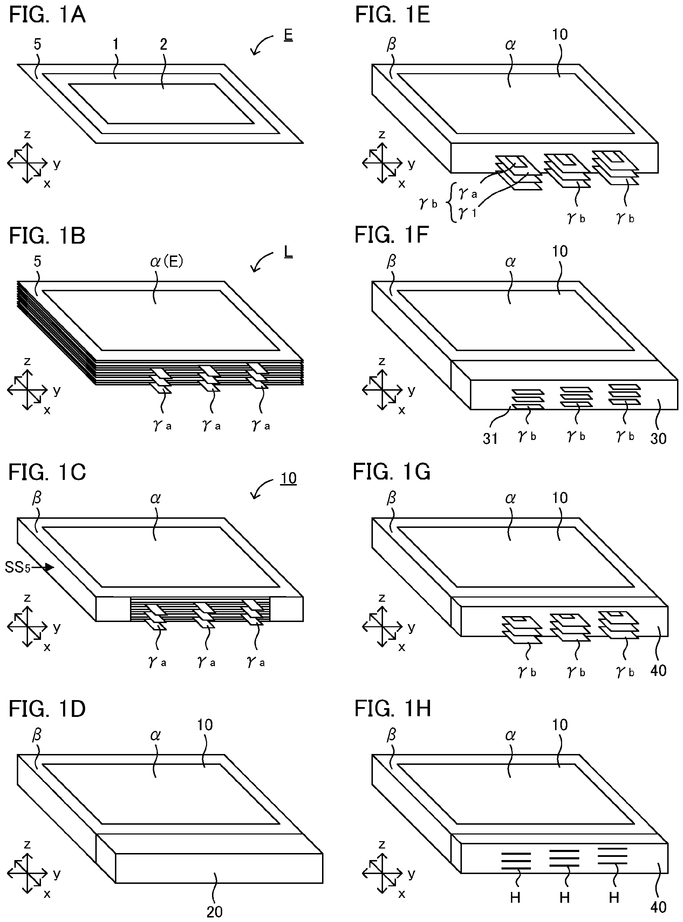

FIGS. 1A to 1H are schematic perspective views illustrating an example of a method for producing a power storage device in the present disclosure. Firstly, as shown in FIGS. 1A to 1C, a stacked member 10 is prepared (preparing step). The stacked member 10 is obtained, for example, by the following method. As shown in FIG. 1A, an electrode E is prepared. The electrode E includes a current collector 1, a cathode layer 2 placed on one surface of the current collector 1, and an anode layer (not shown in the figure) placed on the other surface of the current collector 1. Also, the electrode E includes a frame member 5 for forming a sealing member, along the outer periphery of the current collector 1. Then, as shown in FIG. 1B, a plurality of electrodes E are stacked in the z-axis direction to form an electrode stacked body α. Also, when stacking the plurality of electrodes E in the z-axis direction, a nest A (nest γₐ) is inserted between plurality of adjacent electrodes E. Then, as shown in FIG. 1C, by heating the side surface of SS₅ of the frame member 5 stacked in the z-axis direction, the frame member 5 stacked in the z-axis direction is heat sealed. Thereby, as shown in FIG. 1C, a stacked member 10 including an electrode stacked body α, a sealing member β placed along the outer periphery of the electrode stacked body α viewed from the z-axis direction, and a nest A (nest γₐ), is obtained.

Then, as shown in FIG. 1D, the nest A (not shown in the figure) sticking out from the sealing member β in the stacked member 10, is inserted into a first concave portion (not shown in the figure) in a first mold 20 (first placing step). In the present disclosure, a concave portion is a space to which a nest is inserted, and the concave portion may be a groove with a bottom, and may be a hole portion without a bottom. Then, a resin portion is molded by feeding a first resin between the nest A and the first concave portion. Thereby, as shown in FIG. 1E, a nest B (nest γ_{b}) including the nest A (nest γₐ) and the resin portion γ₁, is obtained (first molding step).

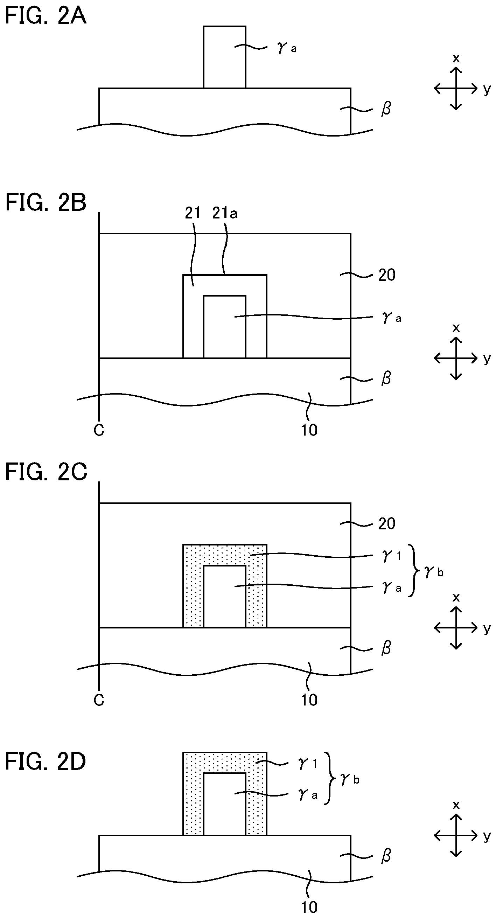

Here, the details of the first placing step and the first molding step are explained referring to FIGS. 2A to 2D. In the first placing step, as shown in FIGS. 2A and 2B, the nest A (nest γₐ) sticking out from the sealing member β is inserted into the first concave portion 21 of the first mold 20. For example, aligning the end surface of first mold 20 with reference surface C, the position of first concave portion 21 with respect to the nest A (nest γₐ) is adjusted. Then, as shown in FIGS. 2C and 2D, the nest B (nest γ_{b}) is obtained by inflating the nest A (nest γₐ) with resin portion γₐ. In the nest B (nest γ_{b}), the resin portion γₐ may absorb the influence of the misalignment of the nest A (nest γₐ).

Then, as shown in FIG. 1F, the nest B (nest γ_{b}) sticking out from the sealing member β in the stacked member 10, is inserted into a second concave portion 31 in the second mold 30 (second placing step). Then, a second resin is fed between the stacked member 10 and the second mold 30. Thereby, as shown in FIG. 1G, resin member 40 is molded on the stacked member 10 side surface (second molding step).

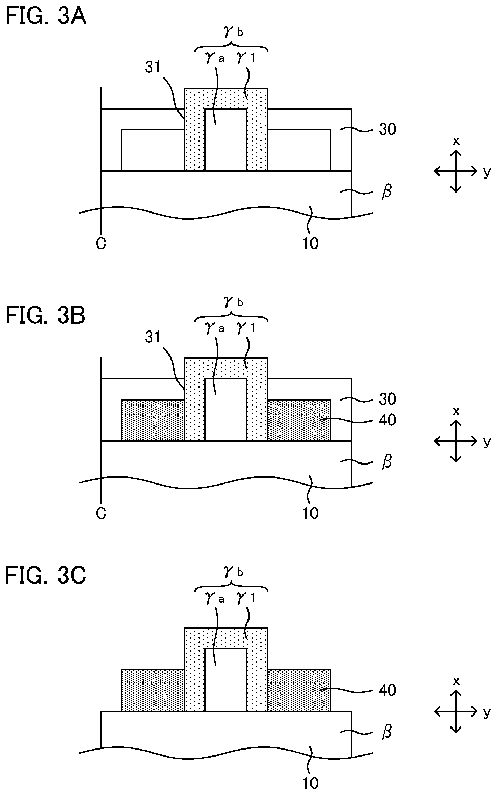

Here, the details of the second placing step and the second molding step are explained referring to FIGS. 3A to 3C. As shown in FIGS. 3A and 3B, the nest B (nest γ_{b}) sticking out from the sealing member β is inserted into the second concave portion 31 of the second mold 30. In the present disclosure, the first concave portion (for example, the first concave portion 21 in FIG. 2B) and the second concave portion 31 have the identical length in the y-axis direction. Further, as shown in FIG. 3B for example, aligning the end surface of the second mold 30 with reference surface C, the position of second concave portion 31 with respect to the nest B (nest γ_{b}) is adjusted, similarly to the position of first concave portion 21 with respect to the nest A (nest γₐ). Thereby, as shown in FIG. 3B, a high-precision positioning of the nest B (nest γ_{b}) and the second concave portion 31 of the second mold 30 is possible. As a result, the resin may be prevented from being leaked into the gap between the nest B (nest γ_{b}) and the second mold 30, so that a desired resin member 40 is molded, as shown in FIG. 3C.

According to the present disclosure, by producing the nest B from the nest A using the first mold, and further molding the resin member using the second mold including the second concave portion whose length in the y-axis direction is identical to that of the first concave portion, a molding failure is suppressed from occurring, when molding a resin member.

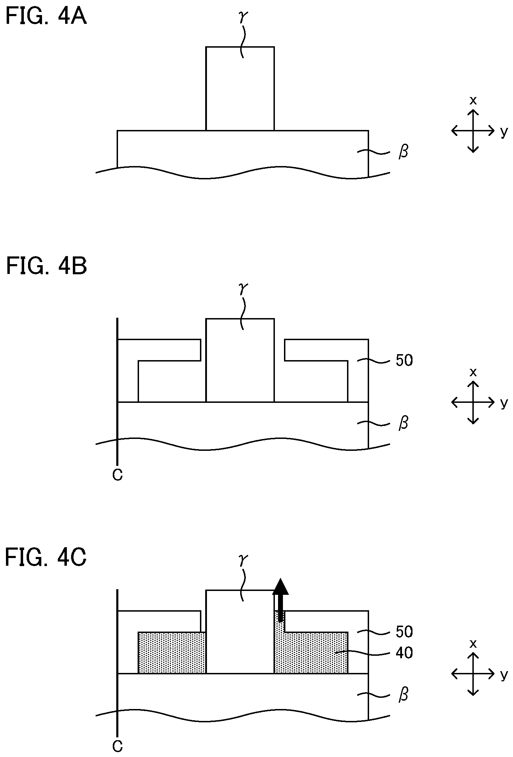

FIGS. 4A to 4C are schematic views illustrating an example of a conventional resin molding method. As shown in FIGS. 4A and 4B, the concave portion of the mold 50 is fit around the nest γ sticking out from the sealing member β. As described above, when the nest γ is inserted into the concave portion of the mold 50, if the nest γ and the concave portion of the mold 50 interfere with each other, the nest γ may be broken. Therefore, it is necessary to set the dimensions of the concave portion of the mold 50 larger to an extent than the dimensions of the nest γ. Meanwhile, when the dimensions of the concave portion of the mold 50 are too large with respect to the dimensions of the nest γ, the resin may leak through the gap during molding, and may cause a burr.

In general, the width of the nest (length in the y-axis direction) is extremely long compared to the thickness of the nest (length in the z-axis direction). Therefore, the influence of the nest displacement is noticeably large in the width direction (y-axis direction). Therefore, in the width direction, it is necessary to set the dimensions of the concave portion of the mold relatively longer than the dimensions of the nest. As a result, a molding failure such as burr is more likely to occur notably. Specifically, as shown in FIG. 4C, the resin leaks into the gap between the nest γ and the concave portion of the mold 50, and a molding failure such as burr is more likely to occur notably.

In contrast, in the present disclosure, as shown in FIGS. 2A to 2D and FIGS. 3A to 3C described above, by producing the nest B from the nest A using the first mold, and further molding the resin member using the second mold including the second concave portion whose length in the y-axis direction is identical to that of the first concave portion, a molding failure may be suppressed from occurring, when molding a resin member.

### 1. Preparing step

The preparing step in the present disclosure is a step of preparing a stacked member including an electrode stacked body including a plurality of electrodes stacked in a z-axis direction, a sealing member placed along an outer periphery of the electrode stacked body viewed from the z-axis direction, and a nest A wherein, in an x-axis direction perpendicular to the z-axis direction, one end portion is placed inside the electrode stacked body and the other end portion sticks out from the sealing member.

### (1) Electrode stacked body

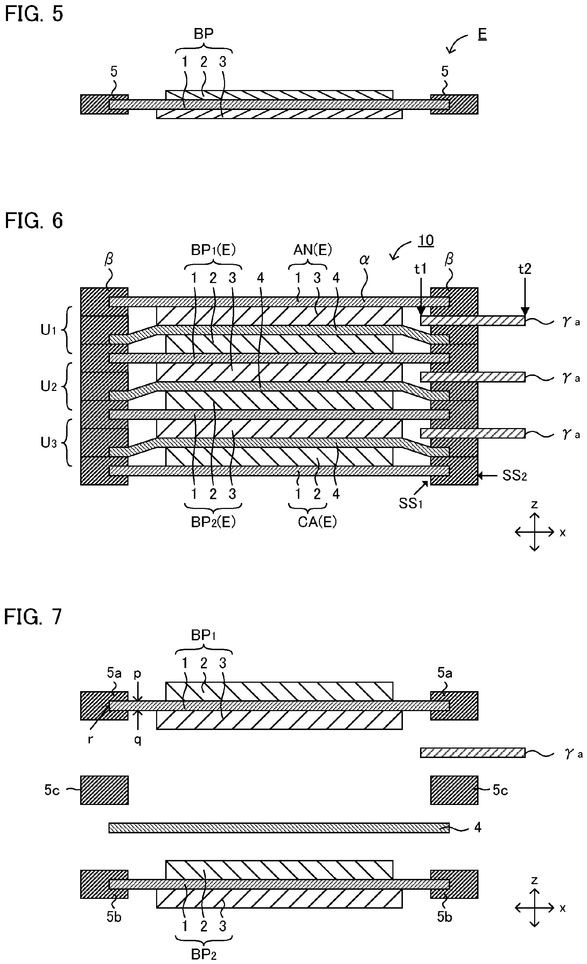

The electrode stacked body in the present disclosure includes a plurality of electrodes stacked in a z-axis direction. The electrode includes a current collector, an electrode layer (a cathode layer or an anode layer) placed on at least one surface of the current collector. As shown in FIG. 5, the electrode E may be a bipolar electrode including a current collector 1, a cathode layer 2 placed on one surface of the current collector 1, and an anode layer 3 placed on the other surface of the current collector 1.

As shown in FIG. 6, the electrode stacked body α includes a plurality of electrodes E stacked in the z-axis direction (thick direction). As the electrode E, the electrode stacked body α shown in FIG. 6 includes a bipolar electrode BP₁, a bipolar electrode BP₂, a cathode side end portion electrode CA, and an anode side end portion electrode AN. The bipolar electrode BP₁, and the bipolar electrode BP₂ respectively includes a current collector 1, a cathode layer 2 placed on one surface of the current collector 1, and an anode layer 3 placed on the other surface of the current collector 1. The cathode side end portion electrode CA includes a current collector 1, and a cathode layer 2 placed on one surface of the current collector 1. The anode side end portion electrode AN includes a current collector 1, and an anode layer 3 placed on one surface of the current collector 1. Also, the electrode stacked body in the present disclosure is not particularly limited as long as it includes a plurality of electrodes E stacked in the z-axis direction, and it may not include a bipolar electrode.

As shown in FIG. 6, the electrode stacked body α is provided with power generating units U (U₁ to U₃). The power generating unit U includes a cathode layer 2, an anode layer 3, and a separator 4 placed between the cathode layer 2 and the anode layer 3. After the through hole H illustrated in FIG. 1H described above is formed, liquid electrolyte is supplied to the cathode layer 2, anode layer 3 and separator 4, via the through hole H. As a result, the cathode layer 2, anode layer 3 and separator 4 are immersed in the liquid electrolyte, respectively. Also, the electrode stacked body in the present disclosure may include one power generating unit, and may include two or more thereof.

The electrode stacked body α shown in FIG. 6 includes a plurality of power generating units (U₁, U₂, and U₃) stacked in the z-axis direction. As shown in FIG. 6, a plurality of power generating units may be directly connected to each other. Also, although not particularly shown in the figures, a plurality of power generating units may be connected in parallel to each other. The plurality of power generating units are independent of each other so that the liquid electrolyte does not circulate between thereof. In FIG. 6, the plurality of power generating units U₁ to U₃ are independent of each other so that the liquid electrolyte does not circulate between thereof. For example, the power generating unit U₁ and the power generating unit U₂ are comparted by the current collector 1 and the sealing member β, and are independent of each other.

One power generating unit may be constituted with two bipolar electrodes. In FIG.6, the electrode stacked body α includes the bipolar electrode BP₁, and the bipolar electrode BP₂, in the z-axis direction. A separator 4 is placed between the adjacent bipolar electrode BP₁ and bipolar electrode BP₂. The power generating unit U₂ includes the cathode layer 2 in the bipolar electrode BP₂, the anode layer 3 in the bipolar electrode BP₁, and the separator 4 placed between them. Meanwhile, the power generating unit U₁ includes the cathode layer 2 in the bipolar electrode BP₁, the anode layer 3 in the anode side end portion electrode AN, and the separator 4 placed between them. Also, the power generating unit U₃ includes the anode layer 3 in the bipolar electrode BP₂, the cathode layer 2 in the cathode side end portion electrode CA, and the separator 4 placed between them.

The shape of the electrode stacked body in the present disclosure, in a plan view (the shape viewed from the z-axis direction) is not particularly limited, and examples thereof may include a quadrilateral shape such as a square shape and a rectangular shape. The length of one side of the shape of the electrode stacked body in a plan vie is, for example, 30 cm or more, may be 50 cm or more, and may be 100 cm or more. Meanwhile, the length of one side is, for example, 200 cm or less.

### (2) Sealing member

The sealing member in the present disclosure is placed along an outer periphery of the electrode stacked body viewed from the z-axis direction. The sealing member is usually placed on the side surface of the electrode stacked body. The side surface of the electrode stacked body is a surface extending in the z-axis direction in the electrode stacked body. Also, the side surface of the electrode stacked body is usually a surface facing the z-axis direction, and connecting the top surface (one main face) of the electrode stacked body and the bottom surface (the other main surface) of the electrode stacked body.

Viewed from the z-axis direction, the sealing member is preferably placed in a frame shape, along the outer periphery of the current collector in the electrode stacked body. For example, in FIG. 1A, a frame-shaped sealing member β is placed along the entire outer periphery of the current collector 1. The sealing member is preferably a resin member. Examples of the resin constituting the sealing member (referred to as third resin) may include a thermoplastic resin. Examples of the thermoplastic resin may include olefin based resins such as polyethylene and polypropylene; and polyester based resins such as polyethylene terephthalate. Among those, the third resin is preferably the olefin based resins.

### (3) Nest A

In the nest A in the present disclosure, in the x-axis direction perpendicular to the z-axis direction, one end portion is placed inside the electrode stacked body and the other end portion sticks out from the sealing member. As shown in FIG. 6, in the x-axis direction, one end portion t1 of the nest A (nest γₐ) is placed inside the electrode stacked body α, and the other end portion t2 of the nest A (nest γₐ) sticks out from the sealing member β.

Viewed from the z-axis direction, the inside of the electrode stacked body α refers to the central side region of the electrode stacked body α with reference to the side surface (inner side surface SS₁) on the electrode stacked body α side, among the side surface of the sealing member β. Viewed from the z-axis direction, the outside of the sealing member β refers to a region opposite side to the center of the electrode stacked body α with reference to the side surface (outer side surface SS₁) on the opposite side to the electrode stacked body α, among the side surface of the sealing member β. Also, the extending direction of the nest A (the direction connecting one end portion t1 and the other end portion t2) is preferably parallel to the x-axis direction. Parallel means that the angle between two directions is 30° or less. The nest A is a part of a metallic mold, which is attached to the mother mold such as the first mold, and is a member for producing a resin molded product.

As shown in FIG. 6, a part of the nest A (nest γₐ) is fixed by the seal member β, and a part of the nest A (nest γₐ) is exposed from the sealing member β. Also, the sealing member β is confined by a confining portion not shown in the figure in the z-axis direction, so that the nest A (nest γₐ) is fixed and held by the sealing member β located on upper and lower side in the z-axis direction. The nest A is, for example, made of metal. The thickness of the nest A (length in the z-axis direction) is not particularly limited, and for example, it is 0.1 mm or more and 0.4 mm or less. Also, the shape of the nest A in a plan view (the shape viewed from the z-axis direction) is not particularly limited, and examples thereof may include a quadrilateral shape such as a square shape and a rectangular shape.

### (4) Stacked member

FIG. 7 is a schematic cross-sectional view (disassembled view) illustrating an example of a method for forming a stacked member in the present disclosure. As shown in FIG. 7, the bipolar electrode BP₁ and the bipolar electrode BP₂ are prepared. The bipolar electrode BP₁ includes a cathode layer 2 placed on one surface of the current collector 1, and an anode layer 3 placed on the other surface of the current collector 1.

Further, the bipolar electrode BP₁ includes a frame member 5a for forming a sealing member, placed along the outer periphery of the current collector 1. Viewed from the z-axis direction, the frame member 5a is usually placed along the entire outer periphery of the current collector 1. For example, when the outer periphery shape of the current collector 1 is quadrilateral shape, the frame member 5a is placed along the entire outer periphery of the quadrilateral shape. Also, as shown in FIG. 7, the frame member 5a preferably covers a part of one main surface p of the current collector 1, a part of the other main surface q of the current collector 1, and the entire side surface r constituting the outer periphery of the current collector 1.

As shown in FIG. 7, the bipolar electrode BP₂ includes a cathode layer 2 placed on one surface of the current collector 1, and an anode layer 3 placed on the other surface of the current collector 1. Further, the bipolar electrode BP₂ includes a frame member 5b for forming a sealing member, placed along the outer periphery of the current collector 1. The details of the bipolar electrode BP₂ are similar to those of the bipolar electrode BP₁ described above.

As shown in FIG. 7, the anode 3 in the bipolar electrode BP₁ and the cathode layer 2 in the bipolar electrode BP₂ are faced to each other via the separator 4. In doing so, at least a part of the outer periphery of the separator 4 is placed between the frame member 5a and frame member 5b. Also, as shown in FIG. 7, the nest A (nest γₐ) and frame member (spacer) 5c are placed between the frame member 5a in the bipolar electrode BP₁ and the frame member 5b in the bipolar electrode BP₂. Then, although not shown in the figures, similar to FIG. 6, a cathode side end portion electrode CA and an anode side end portion electrode AN are also stacked. After that, a plurality of stacked frame members are welded together to form a sealing member. In this way, a stacked member is obtained.

### 2. First placing step

The first placing step of in the present disclosure is a step of inserting the nest A sticking out from the sealing member in the stacked member, into a first concave portion in a first mold.

As shown in FIG. 2B, the nest A (nest γₐ) sticking out from the sealing member β in the stacked member 10, is inserted into a first concave portion 21 in the first mold 20. In doing so, the first mold 20 is placed around the nest A (nest γₐ), establishing a space for molding a resin portion (not shown in the figure). The first concave portion 21 in the first mold 20 is preferably a groove portion with a bottom 21a. This is because it is easy to form a resin portion with the desired shape. Also, as shown in FIG. 2B, the first mold 20 is placed by adjusting the position of the first concave portion 21 in the y-axis direction. The method for adjusting the position of the first concave portion 21 is not particularly limited, and examples thereof may include a method wherein the position of the first concave portion 21 is adjusted by aligning the end surface of the first mold 20 with the reference surface C (surface extending in the x-axis direction), as shown in FIG. 2B. By using a surface extending in the x-axis direction as the reference surface, the displacement in the y-axis direction may be prevented effectively.

### 3. First molding step

The first molding step in the present disclosure is a step of molding a resin portion by feeding a first resin between the nest A and the first concave portion, and obtaining a nest B including the nest A and the resin portion, after the first placing step.

The method for forming a resin portion is not particularly limited, and examples thereof may include resin molding methods such as injection molding method. Examples of the first resin constituting the resin portion may include a thermoplastic resin. Examples of the thermoplastic resin may include olefin based resins such as polyethylene and polypropylene; and polyester based resins such as polyethylene terephthalate. Among them, the first resin is preferably the polyester based resins.

The melting point T_{M1} of the first resin constituting the resin portion is preferably higher than the melting point T_{M2} of the second resin constituting the resin member described later. This is because the first resin may be prevented from melting during the molding of the resin member. The difference between T_{M1} and T_{M2} is, for example, 20°C or more, may be 50°C or more, and may be 100°C or more.

The compatibility between the first resin constituting the resin portion and the second resin constituting the resin member described later is preferably low. This is because, when the compatibility between the first resin and the second resin is low, it is easier to pull out the nest B. Specifically, the first resin is preferably the polyester based resins, and the second resin is preferably the olefin based resins.

The compatibility between the first resin constituting the resin portion and the third resin constituting the sealing member described above is preferably low. This is because, when the compatibility between the first resin and the third resin is low, it is easier to pull out the nest B. Specifically, the first resin is preferably the polyester based resins, and the third resin is preferably the olefin based resins.

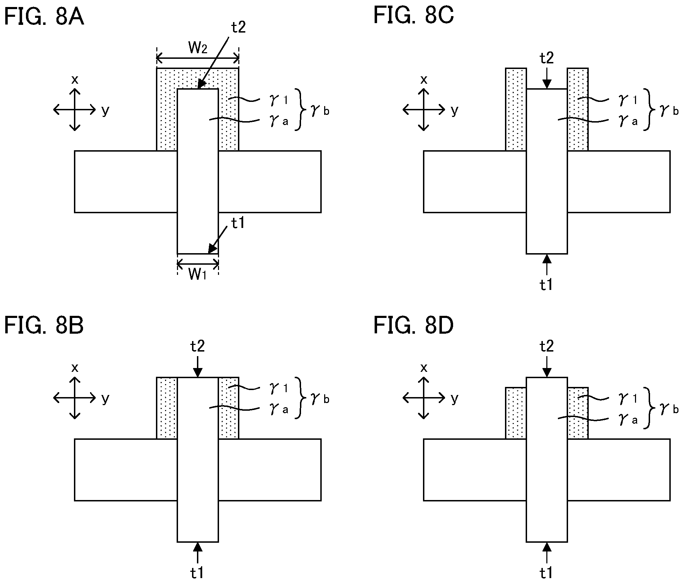

FIGS. 8A to 8D are schematic views illustrating an example of a nest B in the present disclosure. Specifically, they are schematic views wherein the center of nest B in the z-axis direction is cut in the x-y surface. As shown in FIGS. 8A to 8D, when viewed from the z-axis direction, the nest B (nest γ_{b}) preferably includes the resin portion γ₁ on both sides of the nest A (nest γₐ) in the y-axis direction. In other words, in the y-axis direction, it is preferable that the resin portions γ1 are placed so as to sandwich the nest A (nest γₐ).

As shown in FIG. 8A, the width (length in the y-axis direction) of nest A (nest γₐ) is regarded as W₁ and the width of nest B (nest y_{b}) is regarded as W₂. The ratio of W₂ with respect to W₁ (W₂/W₁) is, for example, 1.1 or more, and may be 1.5 or more. Meanwhile, W_{2/}W₁ is, for example, 3.0 or less.

As shown in FIG. 8A, the resin portion γ₁ may be placed so as to cover the other end portion t2 of the nest A (nest γₐ). Meanwhile, as shown in FIGS 8B to 8D, the other end portion t2 of the nest A (nest γₐ) may be exposed from the resin portion γ₁. Also, as shown in FIG. 8B, in the x-axis direction, the position of the other end portion t2 may accord with the position of the end portion of the resin portion γ₁. Also, as shown in FIG. 8C, in the x-axis direction, the position of the end portion of the resin portion γ₁ may protrude from the position of the other end portion t2. Also, as shown in FIG. 8D, in the x-axis direction, the position of the other end portion t2 may protrude from the position of the end portion of the resin portion γ₁.

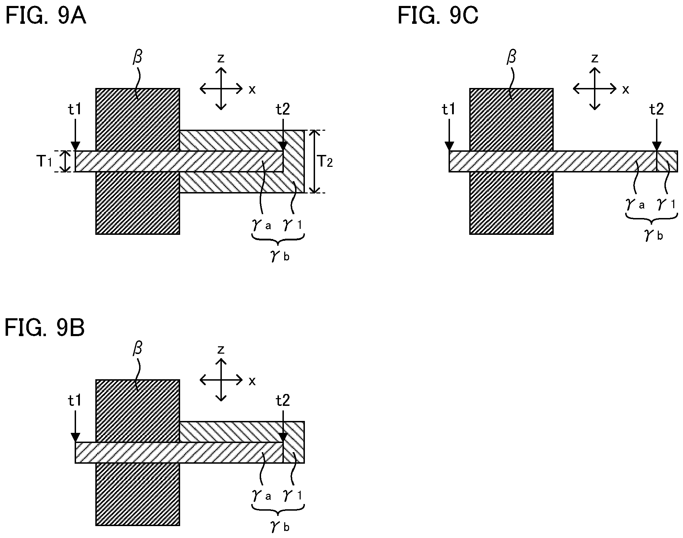

FIGS. 9A to 9C are schematic views illustrating an example of a nest B in the present disclosure. Specifically, they are schematic views wherein the center of nest B in the y-axis direction is cut in the x-z surface. As shown in FIG. 9A, when viewed from the y-axis direction, the nest B (nest γ_{b}) may include the resin portion γ₁ on both sides of the nest A (nest γₐ) in the z-axis direction. In other words, the resin portion γ₁ may be placed on both surfaces (both surfaces whose normal line direction is the z-axis direction) of the nest A (nest γₐ). Also, as shown in FIG. 9B, when viewed from the y-axis direction, the nest B (nest γ_{b}) may include the resin portion γ₁ on one side of the nest A (nest γₐ) in the z-axis direction. In other words, the resin portion γ1 may be placed only on one surface (one surface whose normal line direction is the z-axis direction) of the nest A (nest γₐ). Also, as shown in FIG. 9C, the resin portion γ₁ may not be placed on the surface whose normal line direction is the z-axis direction.

As shown in FIG. 9A, the thickness (length in the z-axis direction) of nest A (nest γₐ) is regarded as T₁ and the thickness of nest B (nest γ_{b}) is regarded as T₂. The ratio of T₂ with respect to T₁ (T_{2/}T₁) is, for example, 1.0 or more, and may be 1.5 or more. Meanwhile, the T₂/T₁ is, for example, 3.0 or less. Also, the shape of the nest B in a plan view (the shape viewed from the z-axis direction) is not particularly limited, and examples thereof may include a quadrilateral shape such as a square shape and a rectangular shape.

### 4. Second placing step

The second placing step of in the present disclosure is a step of inserting the nest B sticking out from the sealing member in the stacked member, into a second concave portion in a second mold. Also, in the present disclosure, length of the first concave portion in a y-axis direction is identical to that of the second concave portion.

"The length of the first concave portion in a y-axis direction is identical to that of the second concave portion" means that they are identical to the extent that resin leakage does not occur during molding. The difference in length between the two is, for example, 1 mm or less, may be 0.5 mm or less, and may be 0.1 mm or less. Also, even when the length of the first concave portion in a y-axis direction is identical to that of the second concave portion, it is preferable that the length of the second concave portion in the y-axis direction is slightly longer than the length of the first concave portion in the y-axis direction. The reason therefore is to prevent the interference between nest B and the second concave portion. The difference between the two may be, for example 0.005 mm or more, and may be 0.01 mm or more.

As shown in FIG. 3A, the nest B (nest γ_{b}) sticking out from the sealing member β in the stacked member 10, is inserted into a second concave portion 31 in the second mold 30. In doing so, the second mold 30 is placed so as to establish a space, for molding a resin member 40, between the nest B (nest γ_{b}) and the second mold 30. Meanwhile, by inserting the nest B (nest γ_{b}) into the second concave portion 31, the nest B (nest γb) is fixed and held by the second concave portion 31. The second concave portion 31 in the second mold 30 is a hole portion without a bottom. Meanwhile, although not specifically shown in the figure, the second concave portion 31 may be a groove portion with a bottom. Also, as shown in FIG. 3B, the second mold 30 is placed by adjusting the position of the second concave portion 31 in the y-axis direction. The method for adjusting the position of the second concave portion 31 is not particularly limited, and examples thereof may include a method wherein the position of the second concave portion 31 is adjusted by aligning the end surface of the second mold 30 with the reference surface C (surface extending in the x-axis direction), as shown in FIG. 3B. The adjustment of the position of the second concave portion 31 in the second placing step and the adjustment of the position of the first concave portion 21 in the first placing step are preferably based on the same criteria.

### 5. Second molding step

The second molding step in the present disclosure is a step of molding a resin member by feeding a second resin between the stacked member and the second mold, after the second placing step. The resin member is a member configured to seal the electrode stacked body, similar to the sealing member described above.

The method for molding a resin member is not particularly limited, and examples thereof may include resin molding methods such as injection molding. Examples of the second resin constituting the resin member may include thermoplastic resins. Examples of the thermoplastic resin may include olefin based resins such as polyethylene and polypropylene; and polyester based resins such as polyethylene terephthalate. Among them, the second resin is preferably the olefin based resins.

The compatibility between the second resin constituting the resin member and the third resin constituting the sealing member described above is preferably high. This is because, when the compatibility between the second resin and the third resin is high, the adhesiveness between the resin member and sealing member is increased. Specifically, the second resin and the third resin are preferably the olefin based resins.

The resin member is placed along the outer periphery of the stacked member. The resin member may be placed along at least a part of the outer periphery of the stacked member, and may be placed along the entire outer periphery of the stacked member. Also, the resin member may have a partition wall structure that comparts each nest B, on the side surface (the side surface opposite side to the sealing member side surface).

### 6. Other steps

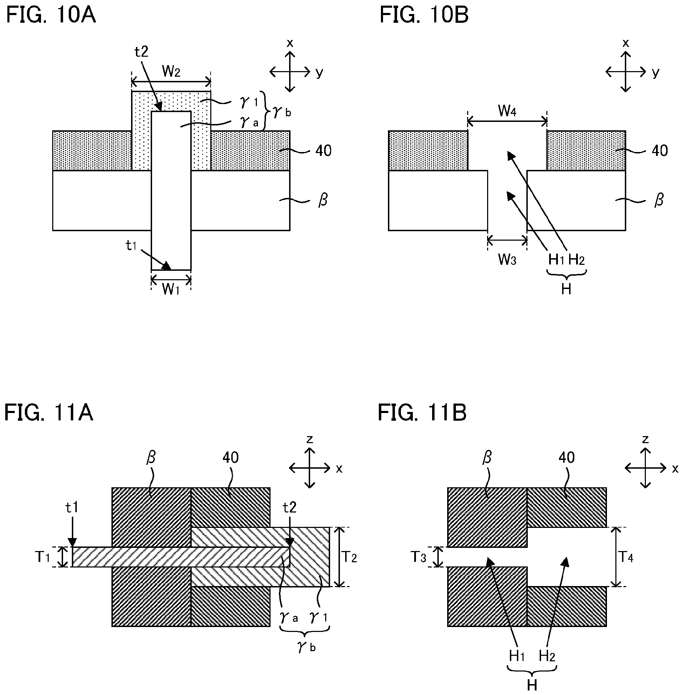

The method for producing a power storage device in the present disclosure may include a through hole forming step of forming a first through hole passing through the sealing member and a second through hole passing through the resin member, by pulling the nest B out from the stacked member and the resin member. Specifically, as shown in FIG. 1H, after the second molding step, the nest B (nest γ_{b}) is pulled out from the stacked member 10 and resin member 40. Thereby, as shown in FIGS. 10A to 10B and FIGS. 11A to 11B, a through hole H including a first through hole H₁ passing through the sealing member β, and a second through hole H₂ communicated with the first through hole H₁ and passing through the resin member 40, is formed.

As shown in FIGS. 10A to 10B, the width W₁ of the nest A (nest γₐ) and the width W₃ of the first through hole H₁ are preferably the same. Similarly, the width of the nest B (nest γ_{b}) and the width W₄ of the second through hole H₂ are preferably the same. The preferable range for the ratio of W₄ with respect to W₃ (W₄/W₃) is similar to W₂/W₁ described above.

As shown in FIGS. 11A to 11B, the thickness T₁ of the nest A (nest γₐ) and the length T₃ of the first through hole H₁ in the z-axis direction are preferably the same. Similarly, the thickness T₂ of the nest B (nest γ_{b}) and the length T₄ of the second through hole H₂ in the z-axis direction are preferably the same. The preferable range for the ratio of T₄ with respect to T₃ (T₄/T₃) is similar to T₂/T₁ described above.

Also, in the through hole forming step, when the nest B is pulled out, the first resin constituting the resin portion of the nest B remains, as a residual component, on the inner wall portion in the second through hole, due to friction. That is, after pulling the nest B out, there may be residual component of the first resin on the inner wall portion in the second through hole. Also, as described above, the melting point of the first resin is preferably higher than the second resin constituting the resin member. Also, the residual component of the first resin may be present on the inner wall portion in the second through hole, and the residual component may not be present on the inner wall portion in the first through hole.

After the through hole forming step described above, the method for producing a power storage device in the present disclosure may include a liquid electrolyte supplying step of supplying liquid electrolyte into the electrode stacked body, via the through hole. A method for supplying liquid electrolyte is not particularly limited, and known methods may be used.

After the liquid electrolyte supplying step described above, the method for producing a power storage device in the present disclosure may include a sealing step of sealing the through hole. A method for sealing the through hole is not particularly limited, and examples thereof may include a method wherein a film is used for the sealing. Also, power storage device obtained by each step described above is explained in "B. Power storage device" later.

### B. Power storage device

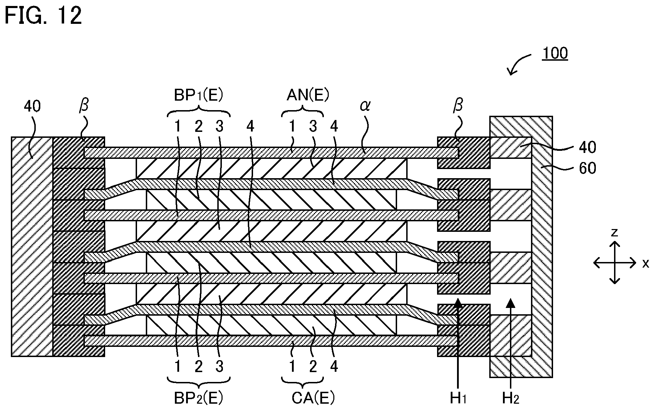

FIG. 12 is a schematic cross-sectional view illustrating an example of a power storage device in the present disclosure. A power storage device 100 shown in FIG. 12 comprises: an electrode stacked body α including a plurality of electrodes stacked in a z-axis direction; a sealing member β placed along an outer periphery of the electrode stacked body α viewed from the z-axis direction; and a resin member 40 placed along an outer periphery of the sealing member viewed from the z-axis direction. In the x-axis direction, the power storage device 100 comprises a first through hole H₁ passing through the sealing member β, and a second through hole H₂ communicated with the first through hole H₁ and passing through the resin member 40. Also, as shown in FIG. 10B, the width W₄ of the second through hole H₂ (the length in the y-axis direction) is longer than the width W₃ of the first though hole H₁ (the length in the y-axis direction).

Each member constituting the power storage device in the present disclosure is similar to the contents described in "A. Method for producing power storage device" above. Also, the power storage device in the present disclosure preferably includes liquid electrolyte in the electrode stacked body. Also, as shown in FIG. 12, the second through hole H₂ may be sealed by a film 60 placed on the side surface of the resin member 40 (the side surface opposite to the sealing member β side surface).

Specific examples of the power storage device in the present disclosure may include a secondary battery (such as a lithium ion secondary battery) and an electric double layer capacitor. Also, examples of the use application of the power storage device may include a power supply of a vehicle such as a hybrid electric vehicle (HEV), a plug-in hybrid electric vehicle (PHEV), a battery electric vehicle (BEV), a gasoline-powered vehicle, and a diesel-powered vehicle. In particular, it is preferably used in the driving power supply of a hybrid electric vehicle (HEV), a plug-in hybrid electric vehicle (PHEV), or a battery electric vehicle (BEV). Also, the power storage device in the present disclosure may be used as a power source for moving objects other than vehicles (such as railroad vehicles, ships, and airplanes), and may be used as a power source for electric appliances such as information processing apparatuses.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Reference Signs List

- 1: current collector
- 2: cathode layer
- 3: anode layer
- 4: separator
- 5: frame member
- 10: stacked member
- 20: first mold
- 30: second mold
- 40: resin member
- 100: power storage device

## Claims

1. A method for producing a power storage device, the method comprising:
a preparing step of preparing a stacked member including an electrode stacked body including a plurality of electrodes stacked in a z-axis direction, a sealing member placed along an outer periphery of the electrode stacked body viewed from the z-axis direction, and a nest A wherein, in an x-axis direction perpendicular to the z-axis direction, one end portion is placed inside the electrode stacked body and the other end portion sticks out from the sealing member;
a first placing step of inserting the nest A sticking out from the sealing member in the stacked member, into a first concave portion in a first mold;
after the first placing step, a first molding step of molding a resin portion by feeding a first resin between the nest A and the first concave portion, and obtaining a nest B including the nest A and the resin portion;
after the first molding step, a second placing step of inserting the nest B sticking out from the sealing member in the stacked member, into a second concave portion in a second mold; and
after the second placing step, a second molding step of molding a resin member by feeding a second resin between the stacked member and the second mold; and
a length of the first concave portion in a y-axis direction perpendicular to the z-axis direction and the x-axis direction is identical to that of the second concave portion.

2. The method for producing a power storage device according to claim 1, **characterized in that**, viewed from the z-axis direction, the nest B includes the resin portion on both sides of the nest A in the y-axis direction.

3. The method for producing a power storage device according to claim 1, **characterized in that**, viewed from the y-axis direction, the nest B includes the resin portion on both sides of the nest A in the z-axis direction.

4. The method for producing a power storage device according to claim 1, **characterized in that** a melting point of the first resin is higher than the melting point of the second resin.

5. The method for producing a power storage device according to claim 1, **characterized in that** the sealing member is a resin member including a third resin;
the third resin and the second resin are olefin based resin; and
the first resin is polyester based resin.

6. The method for producing a power storage device according to claim 1, **characterized in that**, after the second molding step, the method for producing comprises a through hole forming step of forming a first through hole passing through the sealing member and a second through hole passing through the resin member, by pulling the nest B out from the stacked member and the resin member.

7. A power storage device comprising: an electrode stacked body including a plurality of electrodes stacked in a z-axis direction; a sealing member placed along an outer periphery of the electrode stacked body viewed from the z-axis direction; and a resin member placed along an outer periphery of the sealing member viewed from the z-axis direction; and
in an x-axis direction perpendicular to the z-axis direction, the power storage device comprises a first through hole passing through the sealing member, and a second through hole communicated with the first through hole and passing through the resin member; and
when a direction perpendicular to the x-axis direction and the z-axis direction is regarded as a y-axis direction, a length of the second through hole in the y-axis direction is longer than a length of the first though hole in the y-axis direction.

8. The power storage device according to claim 7, **characterized in that** a length of the second through hole in the z-axis direction is longer than a length of the first though hole in the z-axis direction.

9. The power storage device according to claim 7, **characterized in that** a residual component of a first resin, having a melting point higher than a second resin included in the resin member, exists in an inner wall portion in the second through hole.
